# EUROPEAN PATENT SPECIFICATION

(11) **EP 3 064 423 B1**
(45) Date of publication and mention of the grant of the patent: **14.07.2021**
(21) Application number: 16154851.6
(22) Date of filing: 09.02.2016
(51) Int. Cl.: B62M 6/45, B62M 6/60

(54) **HUMAN-MACHINE INTERFACE SYSTEM FOR A PEDAL-ASSISTED BICYCLE**
MENSCH-MASCHINE-SCHNITTSTELLENSYSTEM FÜR EIN PEDALUNTERSTÜTZTES FAHRRAD
SYSTÈME D'INTERFACE HOMME MACHINE POUR UNE BICYCLETTE ASSISTÉE À PÉDALES

(30) Priority: 10.02.2015 IT UB20150006
(43) Date of publication of application: 07.09.2016
(73) Proprietor: ZEHUS S.p.A., 20124 Milano (IT)
(72) Inventor: Corno, Matteo, 20134 Milan (IT); Savaresi, Sergio Matteo, 26100 Cremona (CR) (IT); Berretta, Daniele, 21042 Caronno Pertusella (VA) (IT); Lisanti, Paolo, 24040 Lallio (BG) (IT)
(74) Representative: Zermani, Umberto

(56) References cited:
- EP-A1- 2 471 705
- EP-A1- 2 743 165
- WO-A1-2013/124764
- WO-A1-2013/155112
- DE-U1-202013 001 348
- US-A1- 2009 102 408

## Description

### Technical field of the invention

The present invention refers to the field of pedal-assisted bicycles, in other words to a particular type of bicycles equipped with an electric motor suitable for supplying a power besides the one provided by an user. The present invention finds a particular, but non limiting, application in the field of pedal-assisted bicycles known as "all-in-the-wheel", in other words the bicycles wherein the motor, batteries, sensors and control electronics are contained in a single housing associated to one bicycle wheel.

Particularly, the present invention refers to a human-machine interface system for a pedal-assisted bicycle, such to enable an user to send instructions to the system controlling the bicycle itself.

### Prior art

In the pedal-assisted bicycle field there are interface devices enabling the user to interact with a control system of the bicycle itself, in order to specifically modify the behavior thereof under determined conditions or deliver specific instructions, such as for example instructions adjusting the sensors,.

According to a first proposed type of interface devices, suitable pushbuttons, or switches, or knobs are provided in the bicycle itself.

A further known solution consists of enabling the user to interact with the bicycle control system by a mobile device, such as for example a smartphone.

Some prior art solutions are known from documents EP2743165 or US2009/0102408.

However, both the solutions have the disadvantage of requiring an intervention, also a visual one, of the user which must distract his/her attention away from the drive, for manipulating pushbuttons, or switches, or knobs, or for keying on his/her smartphone.

Further, generally the first solution is not completely adaptable to the "all-in-the-wheel" type bicycles, which desiderably should be devoid of exposed wirings or, in case the pushbuttons, or switches, or knobs and the control system wirelessly communicate with each other, these bicycles should be devoid of external batteries supplying the interface.

On the other hand, using a smartphone is limitative since not all the person have such device at their disposal. Moreover, a smartphone can discharge and therefore become useless when a bicycle is driven. In addition, looking at a smartphone can be dangerous because causes the user to distract his/her attention from the drive for looking at the smartphone screen, and therefore causes he/she to release at least one hand from the bicycle handlebars for giving instructions by the smartphone itself.

A human-machine interface system for a pedal-assisted bicycle according to the preamble of claim 1 is disclosed in EP 2 743 165 A1.

### Brief summary of the invention

Therefore, the problem on which the present invention is based, consists of: making available a human-machine interface system for a pedal-assisted bicycle, being user-friendly and not requiring the user to turn away the eyes from the drive and/or not releasing the hands from the handlebars.

The invention is defined by a human-machine interface system for a pedal-assisted bicycle according to claim 1.

Dependent claims define possible advantageous embodiments of the invention

### Brief description of the drawings

For better understanding the invention and appreciating its advantages, some exemplifying non limiting embodiments thereof will be described in the following referring to the attached figures, wherein:
Figure 1 is a schematic view of a pedal-assisted bicycle portion provided with a human-machine interface system according to the invention;
Figure 2 is a block diagram of the human-machine interface system according to a possible embodiment of the invention.

### Detailed description of the invention

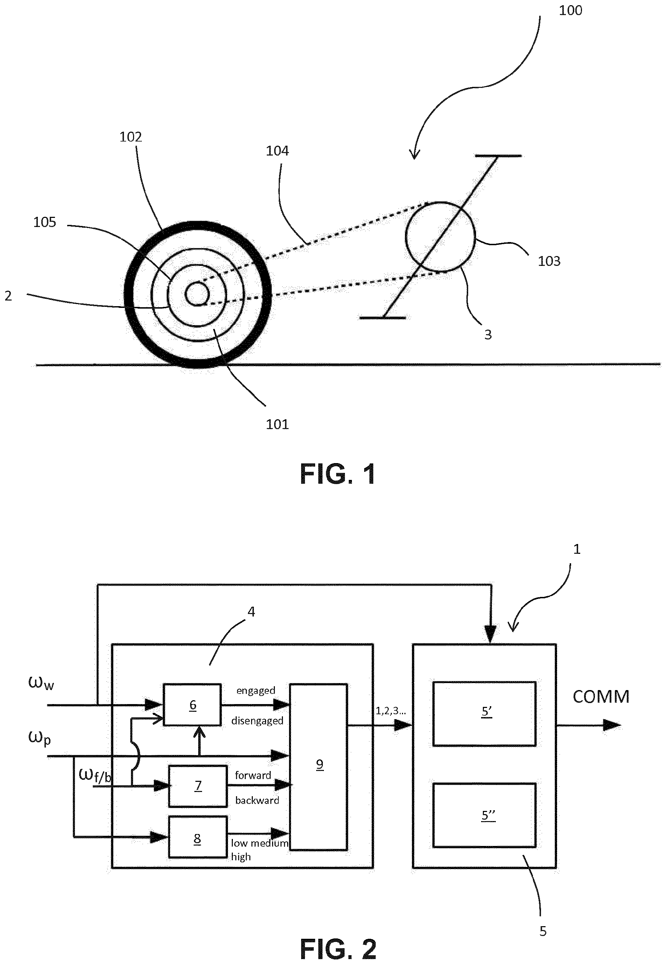

Figure 1 schematically illustrates a portion of a pedal-assisted bicycle 100. The bicycle 100 comprises an electric motor 101 associated to a wheel 102 of the bicycle wheels, the front or preferably the rear wheel. Further, the bicycle 100 comprises a pedal-thrust group 103, by which the user can supply power to the bicycle, connected to one of the wheels, preferably the same wheel 102 to which the motor 101 is associated, by a transmission 104, for example a chain transmission. The transmission 104 comprises a free-wheel mechanism 105 enabling to uncouple the wheel 102 and the pedal-thrust group 103 when, under forward advancement conditions, the wheel 102 speed is greater than the one of the pedal-thrust group 103 or of a pinion associated to the wheel 102, provided in some cases between the pedal-thrust group 103 and the wheel. The free-wheel mechanism 105 enables, for example, to move backward the pedal-thrust group 103, or, possibly, to stop the pedal-thrust without interfering with the forward movement of the wheel and therefore of the bicycle itself during its motion.

The bicycle 100 is provided with a human-machine interface system 1 enabling the user to control the electric motor 101 and/or to act on other operations or operative parameters of the pedal-assisted bicycle. Particularly, the pedal-assisted bicycle 100 comprises a control unit which can have different functions, particularly can control the electric motor for the pedal-thrust assistance, but it can have other functions such as for example can adjust sensors. The human-machine interface system 1 enables the user to act on the control unit by modifying the operation, as it will be explained in the following.

According to a possible embodiment, the interface system 1 comprises one sensor 2 configured for detecting the speed, particularly the angular speed, ω_{w}, of the wheel 102 which the free-wheel mechanism 105 and preferably also the motor 101, are associated to. The sensor 2 is suitable for generating a signal representative of such wheel speed. According to further variants of the invention, the sensor 2 can be omitted.

Further, the interface system 1 comprises a sensor 3 configured for detecting a speed, particularly the angular speed, ω_{ρ}, and the direction ω_{f/b} of the pedal-thrust group 103. Moreover, the sensor 3 is adapted to generate a signal representative of such pedal-thrust speed and a signal representative of such direction of the pedal-thrust. As an alternative to the sensor 3, the interface system 1 can comprise a sensor (not shown in the figures) configured for detecting the torque applied by the user on the pedal-thrust group 103 and also the direction of such applied torque, and suitable for generating signals representative of such applied torque and also the direction thereof.

Referring now to the particular embodiment illustrated in Figure 1, the interface system 1 comprises a message generating module 4 configured for receiving input signals representative of the wheel speed ω_{w} (if the associated sensor 2 is present), of the pedal-thrust speed ω_{ρ}, and of the pedal-thrust direction ω_{f/b} of the pedal-thrust group 103 (or, otherwise, of the pedal-thrust torque and the direction of such torque) and for generating sequences or strings of logic letters (conventionally indicated by the numbers 1, 2, 3... in Figure 2) based on such signals.

Such logic letter sequences or strings implement the inputs of an analyzing module 5 configured for generating instructions ("COMM") for the control unit of the pedal-assisted bicycle, just based on the logic letter sequences forming, by combining them, logic words corresponding to the instructions acknowledged by the analyzing module 5 itself.

With reference to Figure 2, now the message generating module 4 and analyzing module 5 will be specifically described according to possible embodiments of the invention.

According to an embodiment, the message generating module 4 comprises a module 6 for determining the state of the free-wheel mechanism 15. The message generating module 4 further comprises a module 7 for determining the state of the pedal-thrust direction of the pedal-thrust group 103. In addition, the message generating module 4 comprises a module 8 for determining two or more states corresponding to pedal-thrust speed levels of the pedal-thrust group 103.

The module 6 for determining the state of the free-wheel mechanism is configured for determining when the free-wheel mechanism 105 is in an "interlocked" state, in other words in a state wherein the wheel 102 is effectively operated by the pedal-thrust group 103 via the transmission 104, or in a "not interlocked" state, in other words wherein the wheel 102 and pedal-thrust group 103 are uncoupled from each other, for example when the user keeps still the pedals or pedals backwards during the bicycle motion, a condition corresponding to a forward motion of the wheel 102. In Figure 2, the "interlocked" state is labeled as "engaged" and the "not interlocked state" is labeled as "disengaged".

Advantageously, the module 6 is capable of distinguishing between the "engaged" and the "disengaged" state based on signals representative of the wheel speed ω_{w}, of the pedal-thrust speed ω_{ρ} (or of the pedal-thrust torque) and of the pedal-thrust direction ω_{f/w} of the pedal-thrust group 103 (or of the pedal-thrust torque direction applied to the pedal-thrust group 103).

For example, the module 6 can be configured for determining the "engaged" state when the pedal-thrust direction is forward (therefore the user is effectively pedaling). Such information is obtained alternatively from the signal representative of the pedal-thrust speed or of the pedal-thrust torque) and the two speeds of the wheel and pedal-thrust group are equal to each other, or proportional to each other according to a known transmission ratio based on the arrangement of the transmission itself.

The module 7 can determine the state "forward" or "backward" of the pedal-thrust group 103 simply based on the signal representative of the pedal-thrust direction ω_{f/b} or of the torque direction applied to the pedal-thrust group. In Figure 2, the states "forward" and "backward" are respectively labeled as "forward" and "backward".

The module 8 for determining the states corresponding to the levels of the pedal-thrust speed of the pedal-thrust group 103, determines such states according to whether the detected pedal-thrust speed, and transmitted to the module 8 by the signal representative of the pedal-thrust speed, falls in predetermined speed ranges. For example, two speed levels: "low" and "high" are provided. In such case, if the pedal-thrust speed is comprised between 0 and a value **a** > 0, the pedal-thrust speed is considered "low", while if it is comprised between the value **a** and a value **b** > **a,** it is considered high. By the same principle, obviously, it is possible to determine that the speed states can be more than two, for example "low", "medium" and "high". Figure 2 exemplifyingly shows the states "low", "medium", "high" respectively labeled as "low", "medium" and "high". The same result, in other words the same states, can be obtained from the signal representative of the torque applied to the pedal-thrust group which can be for example "low" or "high", or "low", "medium", "high".

Advantageously, the message generating module 4 further comprises a module 9 for generating the previously cited logic letters, configured for generating each of such logic letters based on the combinations of the states from the modules 6, 7, 8, according to those that are effectively provided.

For example, in case all the modules 6, 7 and 8 are provided, the module 8 is configured for determining the states "low", "medium", "high", and the system receives, at the input, the signals representative of the pedal-thrust speed and the direction thereof, the possible combinations of the states, each of them corresponding to a letter, can be those shown in the following table 1:

**Table 1**

| **Free-wheel** | **Pedal-thrust direction** | **Pedal-thrust speed** | **Letter** |
|---|---|---|---|
| Engaged | Forward | Low | 1 |
| Engaged | Forward | Medium | 2 |
| Engaged | Forward | High | 3 |
| Disengaged | Forward | Low | 4 |
| Disengaged | Forward | Medium | 5 |
| Disengaged | Forward | High | 6 |
| Disengaged | Backward | Low | 7 |
| Disengaged | Backward | Medium | 8 |
| Disengaged | Backward | High | 9 |
| - | - | 0 | 0 |

It is observed that the letter 0 conventionally corresponds to the condition wherein the bicycle is still and the user is not pedaling.

Further, it is noted that the free-wheel mechanism condition in the "engaged" state and in the "backward" pedal-thrust direction state, are not possible because inconsistent with the operation of the free-wheel mechanism itself.

If in a not claimed example the module 8 for determining the speed states of the pedal-thrust group 103 is not present, the combinations of states and consequently the number of generatable letters is smaller, as listed in the following exemplifying table 2:

**Table 2**

| **Free-wheel** | **Pedal-thrust direction** | **Letter** |
|---|---|---|
| Engaged | Forward | 1 |
| Disengaged | Forward | 2 |
| Disengaged | Backward | 3 |
| - | - | 0 |

Naturally, it is possible to obtain different combinations of states based on the sensors, and consequently based on the modules effectively available in the system. For example, if the sensor for determining the wheel speed is not present, also the module 6 will not be present. Therefore, the output letters will be obtained from the module 7 and 8 or possibly from only one of the two, alternatively based on signals representative of the speed and direction of the pedal-thrust, or of the pedal-thrust torque and direction of the pedal-thrust torque applied to the pedal-thrust group.

Advantageously, the logic letter generating module 9 is configured for generating a logic letter besides the above cited ones, corresponding to combinations of states. Such additional letter corresponds to a "word end" and, as hereinafter explained, is used for separating the logic letter strings from each other in order to acknowledge the instructions under determined conditions. In other words, the "word end" is for identifying when a word consisting of following logic letters is ended. Preferably, the "word end" is generated based not only on a combination of predetermined states, but also if such combination lasts for a predetermined time or if such combination is associated to a determined number of rounds or fractions of rounds of the pedal-thrust group 103. For example, the "word end" can be generated if the user pedals forward with the free-wheel engaged at any speed for an sufficiently long time, or for a predetermined number of rounds or fractions of rounds of the pedal-thrust group. In other words, with reference to the letters of the example of table 1, a "word end" is generated if anyone of the combinations of states corresponding to the letters 1, 2, 3 lasts for an sufficiently long time, or for a predetermined number of rounds or fractions of round of the pedal-thrust group. Alternatively, with reference to the letters of the example of table 2, a "word end" is generated if the combination of the states corresponding to the letter 1 lasts for an sufficiently long time, or for a number of predetermined number of rounds or fraction of round of the pedal-thrust group.

These "word end" conditions advantageously correspond to a forward pedal-thrust upon an instruction corresponding to a letter sequence supplied by suitably acting on the pedals. Therefore, the word end is simply commanded by the user, by re-starting pedaling normally at the end of a specific instruction supplied by particularly acting on the pedal-thrust group.

It is observed that, in order to provide a suitable reliability when the module 9 generates the letters, in other words in order to prevent accidental events from being interpreted as states which can consequently start supplying undesired instructions, also the logic letters can be generated only in the occurrence of criteria analogous to the ones described with reference to the word end generation. For example, situations, such as a accidental hit applied to the pedals of the pedal-thrust group for a very short period of time, must not be interpreted as a combination of states for example of a type corresponding to the letter 1 in table 1.

To this end, advantageously, the logic letter generating module 9 is configured for generating a single logic letter when the same state combination lasts simultaneously with one of the following conditions, depending on which condition occurs first:
- the combination of states lasts for at least a predetermined period of time;
- the combination of states lasts for a predetermined number of rounds or fractions of rounds of the pedal-thrust group.

In this way, accidental or transient events are prevented from being interpreted by the module 9 as combinations of states which must be converted in logic letters.

The analyzing module 5 receives the logic letter sequences, corresponding to words, generated by the above said modes, and converts them in instructions for the pedal-assisted bicycle control unit, for example for acting on the electric motor.

According to a possible embodiment, the analyzing module 5 can operate according to two distinct modes performing in different ways, particularly according to a closed mode and according to an open mode, preferably both acting and parallelly performing. With reference to Figure 2, a module 5' of the analyzing module operating in the above cited closed mode and a module 5" of the analyzing module operating in the above cited open mode, are illustrated.

According to the closed mode, the analyzing module 5 is configured for generating a command signal COMM after receiving from the message generating module 4, particularly from the logic letters generating module 9, a logic letter string ending with a "word end", obtained according to the previously discussed modes. The word is not acknowledged as well formed and therefore the associated command signal is not generated when a "word end" is absent.

According to the open mode, on the contrary the analyzing module 5 is configured for generating the command signal COMM every time it acknowledges logic letter sequences from the message generating module 4, particularly from the logic letter generating module 9, devoid of a word end, but corresponding to a predetermined instruction. This mode, which does not require the presence of the "word end", can be advantageously used for temporally extending commands.

### Examples

Now, some examples about the generation of command signals with a closed mode and an open mode will be described. With reference to the letter generation, reference will be made to combinations of the states listed in table 1. Obviously, as it will be understood by the person skilled in the art, the generated commands and words underlying the generation of the former, are only given in an exemplifying way. Therefore, commands in addition to the indicated ones or the same commands are possible and can be generated from letter strings different from the ones which will be described.

### Commands generation with a closed mode

### 1)Exit from the stand-bv/on mode

From the stand-by/off mode of the pedal-assisted bicycle, an "on" command signal could be generated by four backward slow pedal-thrusts ending with a word end. Each of the four pedal-thrusts can be acknowledged by the number of fractions of round, or by the duration of the pedal-thrust. Based on the table 1, these actions correspond to the letter sequence: 7-7-7-7-7-"word end".

Optionally, more than one letter string can be selected, in other words more than one word, in order to have the same meaning. For example, the exit from the stand-by mode can be alternatively commanded by four backward pedal-thrusts at an medium speed, or at a high speed. What has been described respectively is expressed by the words: 8-8-8-8-"word end" and 9-9-9-9-"word end".

### 2) Sensors adjustment

Using the pedal-assisted bicycle can periodically require to adjust some of its sensors. For example, the bicycle can be equipped with inertial sensors for detecting accelerations, that sometimes must be adjusted for providing the bicycle with an optimal operation. Such command can be supplied when the bicycle is still, for example by two pairs of backward pedal-thrust torques, separated by a pedal-thrust interruption (in other words the pedals are still) and ending with a "word end". If the backward pedal-thrusts are at a low, medium, or high speed, the word for generating this command, can be the following: 7-7-0-7-7-"word end"; 8-8-0-8-8-"word end"; 9-9-0-9-9-"word end".

### 3) Adjusting the assistance

By the closed mode, it is possible to set the assistance level of the bicycle, in other words the intensity of the aid supplied to the user by the motor, for example the maximum power deliverable from the motor during the operation. Such command can be supplied for example by the sequence of two words, the first one indicating the command "adjust the assistance level" and the second one indicating a command corresponding to the desired assistance level. The command "adjust the assistance level" can be supplied for example by three pairs of backward pedal-thrusts, the pairs being alternated by a pedal-thrust interruption (in other words the pedals are still) and ending with a "word end". If the backward pedal-thrusts are at low, medium, or high speed, the words for generating these commands can be the following: 7-7-7-0-7-7-7-"word end"; 8-8-8-0-8-8-8-"word end"; 9-9-9-0-9-9-9-"word end".

Once this mode has been activated, it is possible to select the assistance level: low, medium, or high, by a forward pedal-thrust respectively at a low, medium, high speed ending with a word end: 1-"word end"; 2-"word end"; 3-"word end".

In all these cases, the acknowledgement by the system of the word ending with a "word end" can be confirmed to the user by a sound signal or by turning on one or more lights by means of the interface system 1.

### Generating commands by an open mode

The above cited examples of closed mode commands are particularly suitable when the bicycle is still. The open mode, which does not require the word end, is, on the contrary, more suitable because it is simpler than the motion condition of the bicycle. Some possible examples for generating commands by an open mode will be described in the following.

### 1) Braking activation with power recovery

As it is known, the electric motor in the pedal-assisted bicycles can be used as a generator for recharging the batteries present on the bicycle itself. The motor, when operates as a generator, supplies a braking torque causing the bicycle to slow. Therefore, such condition is commonly known as "regenerative braking".

For example, the regenerative braking can be activated by pedaling backward, and the braking strength can be modulated by the pedal-thrust speed. The regenerative braking therefore can be interrupted by stopping the feet. For example, the sequence: 7-7-7-8-8-8-9-9-9-0 causes a regenerative braking with a gradually increasing braking torque.

### 2) Boost command

Under determined conditions, a supplementary torque supplied by the electric motor, in addition to the one supplied in the standard operation modes of the bicycle, can be required. For example, a supplementary torque can be necessary before ascending a slope. For example, the boost command can be supplied by alternating a fast forward pedal-thrust and a fast backward pedal-thrust (or otherwise a pedal-thrust with a forward high torque and a pedal-thrust with a backward high torque), independently from the modes of acting on the pedals, supplied after these command (indicated with *):9-3-9-3-*

### 3) Command for an immediate thrust

Such command is similar to the boost command, but is supplied when the bicycle is still, and substantially represents a request of starting the motive torque of the electric motor. Such command can be, for example, supplied by pedaling backward, at a low, medium, or high speed, followed by a pause, and therefore by pedaling forward, at a high, medium, or low speed: 7 (or 8 or 9)-7 (or 8 or 9)-7 (or 8 or 9)-0-0 - 1 (or 2 or 3).

A person skilled in the art, in view of the above discussed description, could appreciate as the interface system, according to the invention, enables the user of a pedal-assisted bicycle, to supply commands by simple specific actions on the pedals. Therefore, specific command devices, such as push-buttons or knobs, are not required and it is not required a portable device, such as a smartphone, to be associated to the bicycle control system. Therefore, commanding the bicycle is a simple operation which does not require the user to be distracted from the drive, with a consequent advantage in terms of drive safety.

## Claims

1. Human-machine interface system (1) for a pedal-assisted bicycle (100) comprising an electric motor (101) coupled to one of the bicycle wheels (102), a pedal-thrust group (103) to be pedaled by an user, a transmission (104) operatively interposed between said pedal-thrust group (103) and one of the bicycle wheels (102) comprising a free-wheel mechanism (105), an unit for controlling the electric motor (101), wherein said interface system (1) comprises:
- a sensor configured for measuring the speed (ωₚ) and direction (ω_{f/b}) of the pedal-thrust of pedal-thrust group (103) or the pedal-thrust torque and the direction of the pedal-thrust torque applied to pedal-thrust group (103), and for generating a signal representative of the pedal-thrust speed or of pedal-thrust torque and a signal representative of the pedal-thrust direction or pedal-thrust torque direction;
**characterized in that** it further
comprises a message generating module (4) comprising:
- a module (7) for calculating a state of the pedal-thrust direction of the pedal-thrust group (103) based on said signal representative of pedal-thrust direction (ω_{f/b}) or of the direction of pedal-thrust torque applied to the pedal-thrust group (103) and
- a module (8) for calculating two or more states corresponding to pedal-thrust speed levels or pedal-thrust torque levels of the pedal-thrust group (103) based on said signals representative of pedal-thrust speed (ωₚ) or of the pedal-thrust torque and
- a module (9) for generating a sequence of predetermined logic letters wherein each of said logic letters is based on a combination of the states from the calculating modules (7, 8);
wherein the interface system (1) further comprises an analyzing module (5) configured for generating command signals (COMM) for said electric motor control unit based on said logic letters sequences.

2. Human-machine interface system (1) according to claim 1, wherein said module (7) for calculating the state of the pedal-thrust direction of pedal-thrust group (103) is configured for calculating a state "forward" and a state "backward" of said pedal-thrust direction.

3. Human-machine interface system (1) according to claim 1 or 2, wherein said module (8) for calculating two or more states corresponding to pedal-thrust speed levels or pedal-thrust torque levels of the pedal-thrust group (103) is configured to calculate a "low" state and a "high" state of the thrust speed or pedal-thrust torque.

4. Human-machine interface system (1) according to any of the preceding claims, further comprising a sensor (2) configured for measuring the speed (ω_{w}) of wheel (102) which the free-wheel mechanism (105) is coupled to, and for generating a signal representative of the speed of said wheel (102), wherein said messages generating module (4) is configured for generating said logic letters sequences based on said signals representative of wheel speed (ω_{w}), of pedal-thrust speed (ωₚ), or of pedal-thrust torque, and of the pedal-thrust direction (ω_{f/b}), or of the direction of pedal-thrust torque applied to the pedal-thrust group (103).

5. Human-machine interface system (1) according to the preceding claim, wherein said messages generating module (4) further comprises a module (6) for calculating the state of free-wheel mechanism (105), configured for calculating a state "engaged" or a state "disengaged" of said free-wheel mechanism (105) based on said signals representative of wheel speed (ω_{w}), of pedal-thrust speed (wp), or of pedal-thrust torque, and of the pedal-thrust direction (ω_{f/b}), or of the direction of pedal-thrust torque applied to the pedal-thrust group.

6. Human-machine interface system (1) according to claim 5, wherein said logic letters generating module (9) is configured for generating each of said logic letters based on the combinations of states of said free-wheel mechanism (105), of said pedal-thrust direction (ω_{f/b}) of pedal-thrust group (103), and further of said pedal-thrust speed (ωₚ) of pedal-thrust group (103), or of the pedal-thrust torque applied to the pedal-thrust group (103).

7. Human-machine interface system (1) according to claim 1 or 6, wherein said logic letters generating module (9) is configured for generating each logic letter of said logic letters when the same combination of states continues: for at least a predetermined time or for a predetermined number of rounds or fractions of round of pedal-thrust group (103), depending to which condition occurs first.

8. Human-machine interface system (1) according to claim 1 or 6 or 7, wherein said logic letters generating module (9) is configured so that a logic letter of said logic letters corresponds to a "word end" of a logic letters sequence.

9. Human-machine interface system (1) according to claim 8, wherein said logic letters generating module (9) is configured so that said "word end" is generated when a predetermined combination of states continues for a predetermined time or in association with a predetermined number of rounds or fractions of round of pedal-thrust group (103).

10. Human-machine interface system (1) according to claim 1 or any of claims from 6 to 9, wherein said logic letters generating module (9) implements a finite state machine.

11. Human-machine interface system (1) according to any of the preceding claims, wherein said analyzing module (5) is configured for supplying said command signal (COMM) upon the reception of a logic letters string ending with a letter corresponding to a "word end".

12. Human-machine interface system (1) according to any of the preceding claims, wherein said analyzing module (5) is configured for generating said command signal (COMM) every time it acknowledges logic letters sequences devoid of a word end, corresponding to a predetermined instruction.

13. Pedal-assisted bicycle (100) comprising:
- an electric motor (100) coupled to one of the bicycle wheels (102),
- a pedal-thrust group (103) to be pedaled by an user,
- a transmission (104) operatively interposed between said pedal-thrust group (103) and one of bicycle wheels (102), comprising a free-wheel mechanism (105);
- an unit for controlling the electric motor (101);
- a human-machine interface system (1) according to anyone of the preceding claims.

## Patentansprüche

1. Mensch-Maschine-Schnittstellensystem (1) für ein pedalunterstütztes Fahrrad (100), umfassend einen Elektromotor (101), der mit einem der Fahrradräder (102) gekoppelt ist, eine Pedalschubgruppe (103), die von einem Benutzer getreten werden soll, ein Getriebe (104), das betriebswirksam zwischen der Pedalschubgruppe (103) und einem der Fahrradräder (102) angeordnet ist, umfassend einen Freilaufmechanismus (105), eine Einheit zum Steuern des Elektromotors (101), wobei das Schnittstellensystem (1) umfasst:
- einen Sensor, der konfiguriert ist, um die Geschwindigkeit (ωₚ) und Richtung (ω_{f/b}) des Pedalschubs der Pedalschubgruppe (103) oder das Pedalschubdrehmoment und die Richtung des auf die Pedalschubgruppe (103) aufgebrachten Pedalschubdrehmoments zu messen und um ein Signal, das für die Pedalschubgeschwindigkeit oder das Pedalschubdrehmoment repräsentativ ist, und ein Signal, das für die Pedalschubrichtung oder die Pedalschubdrehmomentrichtung repräsentativ ist, zu erzeugen;
**dadurch gekennzeichnet, dass** es ferner ein Nachrichtenerzeugungsmodul (4) umfasst, umfassend:
- ein Modul (7) zum Berechnen eines Zustands der Pedalschubrichtung der Pedalschubgruppe (103) basierend auf dem Signal, das für die Pedalschubrichtung (ω_{f/b}) oder die Richtung des auf die Pedalschubgruppe (103) aufgebrachten Pedalschubdrehmoments repräsentativ ist und
- ein Modul (8) zum Berechnen von zwei oder mehreren Zuständen, die Pedalschubgeschwindigkeitsniveaus oder Pedalschubdrehmomentniveaus der Pedalschubgruppe (103) entsprechen, basierend auf den Signalen, die für die Pedalschubgeschwindigkeit (ωₚ) oder das Pedalschubdrehmoment repräsentativ sind und
- ein Modul (9) zum Erzeugen einer Folge von vorbestimmten Logikbuchstaben, wobei ein jeder der Logikbuchstaben auf einer Kombination der Zustände aus den Berechnungsmodulen (7, 8) basiert;
wobei das Schnittstellensystem (1) ferner ein Analysemodul (5) umfasst, das zum Erzeugen von Befehlssignalen (COMM) für die Elektromotorsteuereinheit basierend auf den logischen Buchstabenfolgen konfiguriert ist.

2. Mensch-Maschine-Schnittstellensystem (1) nach Anspruch 1, wobei das Modul (7) zum Berechnen des Zustands der Pedalschubrichtung der Pedalschubgruppe (103) konfiguriert ist, um einen Zustand "vorwärts" und einen Zustand "rückwärts" der Pedalschubrichtung zu berechnen.

3. Mensch-Maschine-Schnittstellensystem (1) nach Anspruch 1 oder 2, wobei das Modul (8) zum Berechnen von zwei oder mehreren Zuständen, die Pedalschubgeschwindigkeitsniveaus oder Pedalschubdrehmomentniveaus der Pedalschubgruppe (103) entsprechen, konfiguriert ist, um einen "niedrigen" Zustand und einen "hohen" Zustand der Schubgeschwindigkeit oder des Pedalschubdrehmoments zu berechnen.

4. Mensch-Maschine-Schnittstellensystem (1) nach einem der vorhergehenden Ansprüche, ferner umfassend einen Sensor (2), der konfiguriert ist, um die Geschwindigkeit (ω_{w}) des Rades (102) zu messen, mit dem der Freilaufmechanismus (105) gekoppelt ist, und um ein Signal, das für die Geschwindigkeit des Rades (102) repräsentativ ist, zu erzeugen, wobei das Nachrichtenerzeugungsmodul (4) konfiguriert ist, um die Logikbuchstabensequenzen basierend auf den Signalen, die für die Radgeschwindigkeit (ω_{w}), die Pedalschubgeschwindigkeit (ωₚ) oder das Pedalschubdrehmoment und die Pedalschubrichtung (ω_{f/b}) oder die Richtung des auf die Pedalschubgruppe (103) aufgebrachten Pedalschubdrehmoments repräsentativ sind, zu erzeugen.

5. Mensch-Maschine-Schnittstellensystem (1) nach dem vorhergehenden Anspruch, wobei das Nachrichtenerzeugungsmodul (4) ferner ein Modul (6) zum Berechnen des Zustands des Freilaufmechanismus (105) umfasst, das konfiguriert ist, um einen Zustand "in Eingriff" oder einen Zustand "gelöst" des Freilaufmechanismus (105) basierend auf den Signalen, die für die Radgeschwindigkeit (ω_{w}), die Pedalschubgeschwindigkeit (ωₚ) oder das Pedalschubdrehmoment und die Pedalschubrichtung (ω_{f/b}) oder die Richtung des auf die Pedalschubgruppe (103) aufgebrachten Pedalschubdrehmoments repräsentativ sind, zu berechnen.

6. Mensch-Maschine-Schnittstellensystem (1) nach Anspruch 5, wobei das Logikbuchstaben-Erzeugungsmodul (9) konfiguriert ist, um einen jeden der Logikbuchstaben basierend auf den Kombinationen der Zustände des Freilaufmechanismus (105) der Pedalschubrichtung (ω_{f/b}) der Pedalschubgruppe (103) und ferner der Pedalschubgeschwindigkeit (ωₚ) der Pedalschubgruppe (103) oder des auf die Pedalschubgruppe aufgebrachten Pedalschubdrehmoments (103) zu erzeugen.

7. Mensch-Maschine-Schnittstellensystem (1) nach Anspruch 1 oder 6, wobei das Logikbuchstaben-Erzeugungsmodul (9) zum Erzeugen eines jeden Logikbuchstaben der Logikbuchstaben konfiguriert ist, wenn die gleiche Kombination von Zuständen fortgesetzt wird: für mindestens eine vorbestimmte Zeit oder für eine vorbestimmte Anzahl von Runden oder Bruchteilen von Runden der Pedalschubgruppe (103), abhängig davon, welche Bedingung zuerst auftritt.

8. Mensch-Maschine-Schnittstellensystem (1) nach Anspruch 1 oder 6 oder 7, wobei das Logikbuchstaben-Erzeugungsmodul (9) so konfiguriert ist, dass ein Logikbuchstabe der Logikbuchstaben einem "Wortende" einer Logikbuchstabenfolge entspricht.

9. Mensch-Maschine-Schnittstellensystem (1) nach Anspruch 8, wobei das Logikbuchstaben-Erzeugungsmodul (9) so konfiguriert ist, dass das "Wortende" erzeugt wird, wenn eine vorbestimmte Kombination von Zuständen für eine vorbestimmte Zeit oder in Verbindung mit einer vorbestimmten Anzahl von Runden oder Bruchteilen der Runde der Pedalschubgruppe (103) fortgesetzt wird.

10. Mensch-Maschine-Schnittstellensystem (1) nach Anspruch 1 oder einem der Ansprüche von 6 bis 9, wobei das Logikbuchstaben-Erzeugungsmodul (9) eine Finite-State-Maschine implementiert.

11. Mensch-Maschine-Schnittstellensystem (1) nach einem der vorhergehenden Ansprüche, wobei das Analysemodul (5) konfiguriert ist, um das Befehlssignal (COMM) nach Empfang einer logischen Buchstabenfolge zu liefern, die mit einem Buchstaben endet, der einem "Wortende" entspricht.

12. Mensch-Maschine-Schnittstellensystem (1) nach einem der vorhergehenden Ansprüche, wobei das Analysemodul (5) konfiguriert ist, um das Befehlssignal (COMM) jedes Mal zu erzeugen, wenn es logische Buchstabenfolgen ohne ein Wortende erkennt, die einer vorbestimmten Anweisung entsprechen.

13. Pedalunterstütztes Fahrrad (100), umfassend:
- einen Elektromotor (100), der mit einem der Fahrradräder (102) gekoppelt ist,
- eine Pedalschubgruppe (103), die von einem Benutzer getreten werden soll,
- ein Getriebe (104), das betriebswirksam zwischen der Pedalschubgruppe (103) und einem der Fahrradräder (102) angeordnet ist, umfassend einen Freilaufmechanismus (105) ;
- eine Einheit zur Steuerung des Elektromotors (101);
- ein Mensch-Maschine-Schnittstellensystem (1) nach einem der vorhergehenden Ansprüche.

## Revendications

1. Système d'interface homme-machine (1) pour une bicyclette (100) à pédalage assisté comprenant un moteur électrique (101) couplé à l'une des roues (102) de la bicyclette, un groupe de pédalage (103) à animer d'un mouvement de pédalage par un utilisateur, une transmission (104) interposée de manière fonctionnelle entre ledit groupe de pédalage (103) et l'une des roues (102) de la bicyclette comprenant un mécanisme de roue libre (105), une unité servant à commander le moteur électrique (101), dans lequel ledit système d'interface (1) comprend :
- un capteur configuré pour mesurer la vitesse (ωₚ) et le sens (ω_{f/b}) du pédalage du groupe de pédalage (103) ou le couple de pédalage et le sens du couple de pédalage appliqué au groupe de pédalage (103), et pour générer un signal représentatif de la vitesse de pédalage ou du couple de pédalage et un signal représentatif du sens de pédalage ou du sens du couple de pédalage ; **caractérisé en ce qu'**il comprend de plus un module (4) de génération de messages comprenant :
- un module (7) servant à calculer un état du sens de pédalage du groupe de pédalage (103) sur la base dudit signal représentatif du sens de pédalage (ω_{f/b}) ou du sens du couple de pédalage appliqué au groupe de pédalage (103) et
- un module (8) servant à calculer deux ou plusieurs états correspondant à des niveaux de vitesse de pédalage ou à des niveaux de couple de pédalage du groupe de pédalage (103) sur la base desdits signaux représentatifs de la vitesse de pédalage (ωₚ) ou du couple de pédalage et
- un module (9) servant à générer une séquence de lettres logiques prédéterminées dans lequel chacune desdites lettres logiques est basée sur une combinaison des états provenant des modules de calcul (7, 8) ;
dans lequel le système d'interface (1) comprend de plus un module d'analyse (5) configuré pour générer des signaux de commande (COMM) pour ladite unité de commande de moteur électrique sur la base desdites séquences de lettres logiques.

2. Système d'interface homme-machine (1) selon la revendication 1, dans lequel ledit module (7) servant à calculer l'état du sens de pédalage du groupe de pédalage (103) est configuré pour calculer un état « avant » et un état « arrière » dudit sens de pédalage.

3. Système d'interface homme-machine (1) selon la revendication 1 ou 2, dans lequel ledit module (8) servant à calculer deux ou plusieurs états correspondant à des niveaux de vitesse de pédalage ou des niveaux de couple de pédalage du groupe de pédalage (103) est configuré pour calculer un état « faible » et un état « élevé » de la vitesse de poussée ou du couple de pédalage.

4. Système d'interface homme-machine (1) selon l'une quelconque des revendications précédentes, comprenant de plus un capteur (2) configuré pour mesurer la vitesse (ω_{w}) de la roue (102) à laquelle est couplé le mécanisme de roue libre (105), et pour générer un signal représentatif de la vitesse de ladite roue (102), dans lequel ledit module de génération (4) de messages est configuré pour générer lesdites séquences de lettres logiques sur la base desdits signaux représentatifs de la vitesse de la roue (ω_{w}), de la vitesse de pédalage (ωₚ) ou du couple de pédalage et du sens de pédalage (ω_{f/b}) ou du sens du couple de pédalage appliqué au groupe de pédalage (103).

5. Système d'interface homme-machine (1) selon la revendication précédente, dans lequel ledit module (4) de génération de messages comprend de plus un module (6) servant à calculer l'état du mécanisme de roue libre (105), configuré pour calculer un état « engagé » ou un état « désengagé » dudit mécanisme de roue libre (105) sur la base desdits signaux représentatifs de la vitesse de la roue (ω_{w}), de la vitesse de pédalage (ωₚ) ou du couple de pédalage et du sens de pédalage (ω_{f/b}) ou du sens du couple de pédalage appliqué au groupe de pédalage.

6. Système d'interface homme-machine (1) selon la revendication 5, dans lequel ledit module de génération (9) de lettres logiques est configuré pour générer chacune desdites lettres logiques sur la base des combinaisons d'états dudit mécanisme de roue libre (105), dudit sens de pédalage (ω_{f/b}) du groupe de pédalage (103) et, de plus, de ladite vitesse de pédalage (ωₚ) du groupe de pédalage (103) ou du couple de pédalage appliqué au groupe de pédalage (103).

7. Système d'interface homme-machine (1) selon la revendication 1 ou 6, dans lequel ledit module de génération (9) de lettres logiques est configuré pour générer chaque lettre logique desdites lettres logiques lorsque la même combinaison d'états se poursuit : pendant au moins une durée prédéterminée ou pendant un nombre prédéterminé de tours ou de fractions de tour du groupe de pédalage (103), selon la condition qui se produit en premier.

8. Système d'interface homme-machine (1) selon la revendication 1 ou 6 ou 7, dans lequel ledit module de génération (9) de lettres logiques est configuré de sorte qu'une lettre logique desdites lettres logiques correspond à une « fin de mot » d'une séquence de lettres logiques.

9. Système d'interface homme-machine (1) selon la revendication 8, dans lequel ledit module (9) de génération de lettres logiques est configuré de sorte que ladite « fin de mot » est générée lorsqu'une combinaison prédéterminée d'états continue pendant une durée prédéterminée ou en association avec un nombre prédéterminé de tours ou de fractions de tour du groupe de pédalage (103).

10. Système d'interface homme-machine (1) selon la revendication 1 ou l'une quelconque des revendications de 6 à 9, dans lequel ledit module de génération (9) de lettres logiques met en œuvre une machine à états finis.

11. Système d'interface homme-machine (1) selon l'une quelconque des revendications précédentes, dans lequel ledit module d'analyse (5) est configuré pour fournir ledit signal de commande (COMM) suite à la réception d'une chaîne de lettres logiques se terminant par une lettre correspondant à une « fin de mot ».

12. Système d'interface homme-machine (1) selon l'une quelconque des revendications précédentes, dans lequel ledit module d'analyse (5) est configuré pour générer ledit signal de commande (COMM) à chaque fois qu'il reconnaît des séquences de lettres logiques dépourvues de fin de mot, correspondant à une instruction prédéterminée.

13. Bicyclette à pédalage assisté (100) comprenant :
- un moteur électrique (100) couplé à l'une des roues (102) de la bicyclette,
- un groupe de pédalage (103) à animer d'un mouvement de pédalage par un utilisateur,
- une transmission (104) interposée de manière fonctionnelle entre ledit groupe de pédalage (103) et l'une des roues (102) de la bicyclette, comprenant un mécanisme de roue libre (105) ;
- une unité servant à commander le moteur électrique (101) ;
- un système d'interface homme-machine (1) selon l'une quelconque des revendications précédentes.
